# EUROPEAN PATENT APPLICATION

(11) **EP 4 368 079 A1**
(43) Date of publication of application: **15.05.2024**
(21) Application number: 23806152.7
(22) Date of filing: 02.06.2023
(51) Int. Cl.: A47J 31/44

(54) **CAPSULE DRINK BREWING DEVICE**

(30) Priority: 29.09.2022 CN 202222595588 U
(71) Applicant: Zhuhai Hengqin Xinrun Intelligent Manufacturing Co., Ltd., Zhuhai, Guangdong 519031 (CN)
(72) Inventor: CHEN, Xuejun, Zhuhai, Guangdong 519031 (CN); MA, Long, Zhuhai, Guangdong 519031 (CN); HUANG, Shijun, Zhuhai, Guangdong 519031 (CN)
(74) Representative: Haseltine Lake Kempner LLP
(86) International application number: PCT/CN2023/097964
(87) International publication number: WO 2024/066442

(57) **Abstract**

The utility model discloses a capsule beverage brewing device. The capsule beverage brewing device includes a main body, a clamping mechanism mounted on the main body, a pushing base slidably provided on the main body, a first puncture liquid guiding member mounted on the pushing base, an ejection mechanism mounted on the main body, and a second puncture liquid guiding member mounted on the main body. The ejection mechanism includes an ejection base. The pushing base is provided with a clamping groove, the main body has a discharging opening, and the second puncture liquid guiding member and the pushing base are spaced apart and are arranged above the discharging opening. The ejection base, the clamping mechanism, and the second puncture liquid guiding member are arranged sequentially along a movement path of the pushing base. The utility model can realize the automatic falling of the capsule after brewing the capsule drink and complete the separation of the capsule, and belongs to the technical field of household appliances.

## Description

This utility model claims priority of Chinese Patent Application No. 2022225955882, filed on September 29, 2022, entitled "CAPSULE BEVERAGE BREWING DEVICE", the entire content of which is incorporated herein in its entirety.

### TECHNICAL FIELD

The present utility model relates to the field of household appliances, and in particular to a capsule beverage brewing device.

### BACKGROUND

Capsule drinks mean that coffee beans, soybeans and other raw materials are first ground into powder and then put into aluminum capsules, which eliminates problems such as acidification and oxidation of ordinary coffee beans or coffee powder when exposed to air. When brewing, the brewing device is directly used to inject and discharge liquid to achieve brewing. Currently, in most brewing devices, capsules are manually put into the brewing device. After the brewing is completed, the used capsules also need to be taken out manually. Because the used capsules have been squeezed, punctured and deformed, the used capsules are difficult to take out due to the fact that the used capsules are extruded, punctured and deformed, and part of residual liquid remains in the capsules. When it is taken out manually, it is easy for the residual liquid to contaminate the user's hands or the environment. The brewing device in the prior art cannot realize the automatic separation of the capsule.

### SUMMARY

The object of the present utility model is to provide a capsule beverage brewing device. The present utility model can realize the automatic falling of the capsule after the brewing of the capsule drink is completed, and complete the separation of the capsule.

The utility model provides a capsule beverage brewing device, which includes a main body, a clamping mechanism mounted on the main body, a pushing base slidably provided on the main body, a first puncture liquid guiding member mounted on the pushing base, an ejection mechanism mounted on the main body, and a second puncture liquid guiding member mounted on the main body. The ejection mechanism includes an ejection base. The pushing base is provided with a clamping groove, the main body has a discharging opening, and the second puncture liquid guiding member and the pushing base are spaced apart and are arranged above the discharging opening. The ejection base, the clamping mechanism, and the second puncture liquid guiding member are arranged sequentially along a movement path of the pushing base.

Further, the clamping mechanism includes a clamping base and a first spring, the clamping base is slidably provided on the main body, and the first spring is clamped between the clamping base and the main body, and the clamping base is located on the movement path of the pushing base.

Further, the clamping base is provided with a first pushing inclined surface, and the pushing base is provided with a second pushing inclined surface adapted to the first pushing inclined surface, and the first pushing inclined surface is located on a moving path of the second pushing inclined surface.

Further, the ejection mechanism further includes a sliding base and a second spring, the sliding base is slidably provided on the main body, a sliding direction of the sliding base is the same as a sliding direction of the pushing base, the second spring is clamped between the sliding base and the main body, and the ejecting base is mounted on the sliding base and is located on the movement path of the pushing base.

Further, an edge of the clamping groove is provided with an ejection outlet; the ejection base includes an ejection plate, and the ejection plate is located on a moving path of the ejection outlet.

Further, the pushing base is configured to move along a first direction and a second direction, the first direction is opposite to the second direction, the ejection base and the clamping base are arranged sequentially along the first direction and are both located on the movement path of the pushing base. When the pushing base moves along the first direction, the pushing base pushes the ejection base to move along the first direction and simultaneously pushes the clamping base to move along an axis direction of the first spring. When the pushing base moves along the second direction, the clamping base is reset under an action of the first spring, the ejection base is reset under an action of the second spring, and a limiting ejection space is formed between the clamping base and the ejection base.

Further, the pushing base is provided with a liquid inlet channel, the first puncture liquid guiding member has a liquid injection cavity and a liquid injection opening in communication with the liquid injection cavity, and the liquid injection cavity is in communication with the liquid inlet channel.

Further, the main body is provided with a liquid outlet channel, the second puncture liquid guiding member has a liquid outlet cavity and a liquid outlet in communication with the liquid outlet cavity, and the liquid outlet cavity is in communication with the liquid outlet channel.

Further, the main body includes a first housing and a second housing, the first housing and the second housing cooperatively enclose a feeding channel, and the clamping mechanism is located in the feeding channel.

Further, the capsule beverage brewing device further includes a driving mechanism. The driving mechanism includes a handle pivotally connected to the main body through a first rotating shaft, a first connecting member pivotally connected to the handle through a second rotating shaft, a second connecting member pivotally connected to the first connecting member through a third rotating shaft, and a third connecting member is pivotally connected to the second connecting member through a fourth rotating shaft. The second connecting member is pivotally connected to the main body through a fifth rotating shaft, and the third connecting member is pivotally connected to the pushing base through a sixth rotating shaft.

The technical solution provided by the present utility model has the following advantages and effects.

The capsule beverage brewing device of the present utility model uses the ejection base to eject the capsule. After the capsule is placed in the capsule beverage brewing device, the edge of the capsule is clamped by the clamping mechanism located on the side adjacent to the second puncture liquid guiding member. Therefore, during brewing, when the capsule moves to the second puncture liquid guiding member, the edge of the capsule does not need to be forced to elastically pass through the ejection base, such that the edge of the capsule will not be deformed or damaged. After brewing is completed, when the capsule moves reversely to the ejection base, the ejection base ejects the capsule more reliably, so that the capsule automatically falls and the automatic separation of the capsule from the capsule beverage brewing device is completed.

### BRIEF DESCRIPTION OF THE DRAWINGS

FIG. 1 is a schematic view of a capsule beverage brewing device in a non-working state.
FIG. 2 is a schematic view of the capsule beverage brewing device in a working state.
FIG. 3 is a schematic view of a clamping mechanism, a pushing base, an ejection mechanism, and a driving mechanism in a non-working state.
FIG. 4 is a schematic view of the clamping mechanism, the pushing base, the ejection mechanism, and the driving mechanism in a working state.
FIG. 5 is a schematic view of the operation of the clamping mechanism clamping a capsule.
FIG. 6 is a schematic view of the operation of the pushing base pushing a capsule.
FIG. 7 is an enlarged view of the position A of FIG. 6.
FIG. 8 is a schematic view of the operation of a first puncture liquid guiding member and a second puncture liquid guiding member puncturing the capsule.
FIG. 9 is a front cross-sectional view of FIG. 8.
FIG. 10 is a schematic view of the operation of the pushing base driving the capsule away from the second puncture liquid guiding member.
FIG. 11 is an enlarged view of the portion B of FIG. 10.
FIG. 12 is a schematic view of the operation of an ejection base ejecting a capsule.
FIG. 13 is a schematic view of a first housing.
FIG. 14 is a schematic view of a second housing.

### Description of reference signs;

10. Main body; 11. First housing; 12. Second housing; 13. Liquid outlet channel; 14. Feeding channel; 15. Discharging opening; 16. First sliding channel; 17. Second sliding channel; 18. Third sliding channel; 19. Driving chamber; 111. First guiding groove; 121. Second guiding groove; 141. First feeding half-groove; 142. Second feeding half-groove; 151. First discharging half-opening; 152, Second discharging half-opening; 191, First driving half-groove; 192, Second driving half-groove;
20. Clamping mechanism; 21. Clamping base; 22. First spring; 211. Clamping gap; 212. First pushing inclined surface;
30. Pushing base; 31. Clamping groove; 32. Second pushing inclined surface; 33. Ejection outlet; 34. Liquid inlet channel;
40. First puncture liquid guiding member; 41. First sealing member;
50. Second puncture liquid guiding member; 51. Second sealing member;
60. Ejection mechanism; 61. Ejection base; 62. Sliding base; 63. Second spring; 611. Ejection plate;
70. Driving mechanism; 71. First connecting member; 72. Second connecting member; 73. Third connecting member; 75. Handle; 701. First rotating shaft; 702. Second rotating shaft; 703. Third rotating shaft; 704, Fourth rotating shaft; 705, Fifth rotating shaft; 706, Sixth rotating shaft;
80. Capsule; 81. Edge;
90. Limiting ejection space.

### DETAILED DESCRIPTION OF THE EMBODIMENTS

The specific implementation manner of the present utility model will be further described in detail below with reference to the accompanying drawings and embodiments. The following embodiments are used to explain the present utility model, and not intended to limit the present utility model.

In the description of the present utility model, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" are based on the azimuth or position relationship shown in the attached drawings, which are only for the convenience of describing the present utility model and simplifying the description, rather than indicating or implying that the device or element must have a specific azimuth, be constructed and operated in a specific azimuth, so such terms cannot be understood as a limitation of the present utility model.

In the description of the present utility model, it should be understood that, unless otherwise expressly specified and limited, the terms "mount", "connect", "contact", "communication", "but", "clamp", etc. should be understood in a broad sense, for example, they can be fixed connections, detachable connections, or integrated. They can be mechanical connection or electrical connection. They can be directly connected or indirectly connected through an intermediate medium. They can be the connection within two elements. For those skilled in the art, the specific meaning of the above terms in the present utility model can be understood according to the specific situation.

Unless otherwise specified or defined, in the description of the utility model, it should be understood that the terms "first", "second", etc. are used in the utility model to describe various information, but the information should not be limited to these terms. These terms are only used to distinguish information of the same type from each other. For example, without departing from the scope of the utility model, the "first" information may be referred to as the "second" information, and similarly, the "second" information may be referred to as the "first" information.

Unless otherwise specified or defined, the term "and/or" used in the present utility model includes any and all combinations of one or more related listed items.

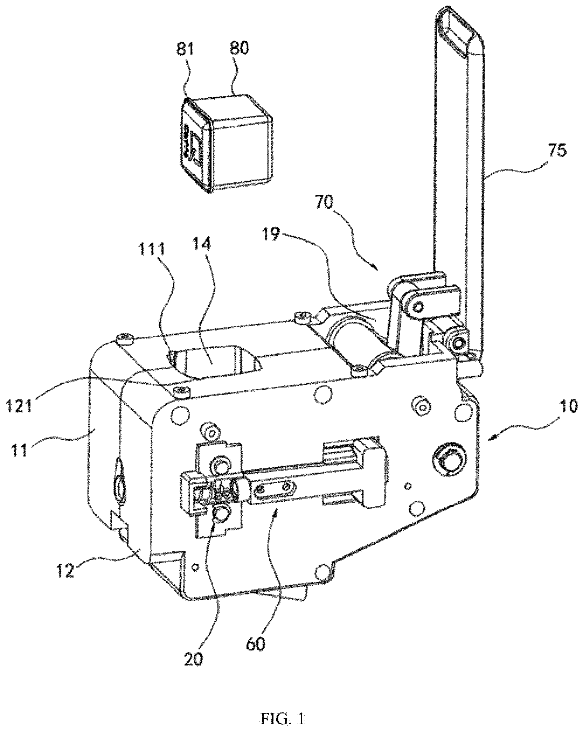

For the convenience of description, unless otherwise stated, the up and down directions mentioned below are consistent with the up and down directions of FIG. 1 itself, the front and rear directions mentioned below are consistent with the left and right directions of FIG. 1 itself, and the left and right directions mentioned below are consistent with the projection direction of FIG. 1 itself.

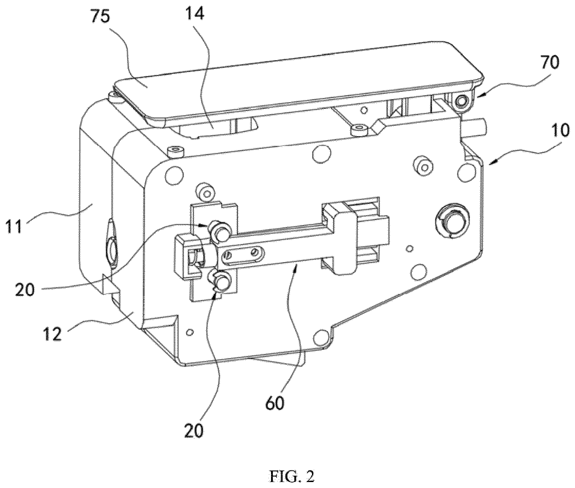

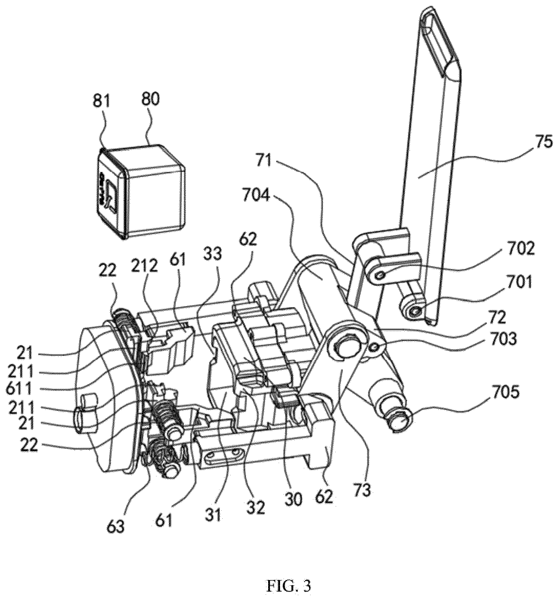

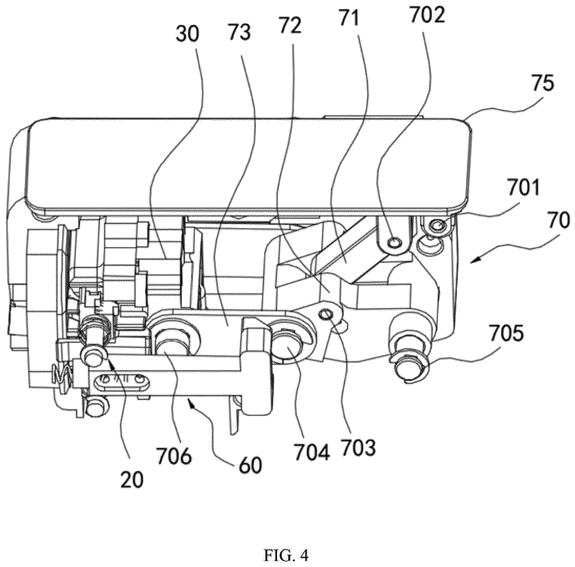

As shown in FIGS. 1 to 4, a capsule beverage brewing device includes a main body 10, a clamping mechanism 20 mounted on the main body 10, a pushing base 30 slidably provided on the main body 10, a first puncture liquid guiding member 40 mounted on the pushing base 30, an ejection mechanism 60 mounted on the main body 10, and a second puncture liquid guiding member 50 mounted on the main body 10. The ejection mechanism 60 includes an ejection base 61 configured to be provided on a movement path of an edge 81 of the capsule 80. The pushing base 30 is slidably arranged on the main body 10 in a front-back direction and can drive the first puncture liquid guiding member 40 to slide forward and backward, so that the first puncture liquid guiding member 40 can move adjacent to or away from the second puncture liquid guiding member 50. Both the first puncture liquid guiding member 40 and the second puncture liquid guiding member 50 can puncture the capsule 80. The first puncture liquid guiding member 40 can inject liquid into the capsule 80 for brewing, and then the liquid flows out from the second puncture liquid guiding member 50, alternatively the second puncture liquid guiding member 50 injects liquid into the capsule 80 for brewing, and then the liquid flows out from the first puncture liquid guiding member 40. In this embodiment, the first puncture liquid guiding member 40 is a liquid injecting member, and the second puncture liquid guiding member 50 is a liquid discharging member.

The pushing base 30 is provided with a clamping groove 31. When the pushing base 30 moves, the pushing base 30 is sleeve on the capsule 80 through the clamping groove 31 and drive the capsule 80 to move forward and backward. The first puncture liquid guiding member 40 is mounted in the clamping groove 31. The main body 10 has a discharging opening 15. During brewing, the capsule 80 is placed between the pushing base 30 and the second puncture liquid guiding member 50 and is clamped by the clamping mechanism 20. The second puncture liquid guiding member 50 and the pushing base 30are spaced apart and are arranged above the discharging opening 15. After brewing is completed, the capsule 80 is separated from the main body 10 from the discharging opening 15 under the action of gravity.

The ejection base 61, the clamping mechanism 20, and the second puncture liquid guiding member 50 are arranged sequentially along a movement path of the pushing base 30. When the pushing base 30 moves toward the second puncture liquid guiding member 50, it will pass through the ejection base 61 and the clamping mechanism 20, and finally reaches the second puncture liquid guiding member 50. When the pushing base 30 moves away from the second puncture liquid guiding member 50, the pushing base 30 first passes through the clamping mechanism 20 and then passes through the ejection base 61. The ejection base 61 pushes against the edge 81 of the capsule 80 on the pushing base 30, so that the pushing base 30 is separated from the capsule 80, and the capsule 80 is separated from the discharging opening 15.

During use, the capsule 80 is first placed between the pushing base 30 and the second puncture liquid guiding member 50 in the main body 10, and then the clamping mechanism 20 is driven to clamp the edge 81 of the capsule 80 to prevent the capsule 80 from falling out of the discharging opening 15. The clamping mechanism 20 is located between the ejection base 61 and the second puncture liquid guiding member 50. Therefore, the edge 81 of the capsule 80 is located between the ejection base 61 and the second puncture liquid guiding member 50 at this time. When the capsule 80 moves in a direction adjacent to the second puncture liquid guiding member 50, the edge 81 of the capsule 80 does not need to be forced to elastically pass through the ejection base 61, such that the edge 81 of the capsule 80 will not be damaged. The capsule 80 moves in the opposite direction and passes through the ejection base 61. At this time, the ejection base 61 can withstand the edge 81 of the capsule 80. When the capsule 80 moves reversely and passes through the ejection base 61, the ejection base 61 can hold the edge 81 of the capsule 80.

After the clamping mechanism 20 clamps the edge 81 of the capsule 80, the pushing base 30 is driven to slide forward, so that the capsule 80 falls into the clamping groove 31 and the pushing base 30 triggers the clamping mechanism 20 to release the capsule 80, thereby causing the pushing base 30 to drive the capsule 80 to move toward the second puncture guiding member 50. When the capsule 80 is clamped between the first puncture liquid guiding member 40 and the second puncture liquid guiding member 50, and the first puncture liquid guiding member 40 punctures the capsule 80, the pushing base 30 stops sliding forward. The first puncture liquid guiding member 40 injects liquid into the capsule 80. The liquid is generally boiled water or warm water. The liquid is mixed with coffee powder and other powders in the capsule 80 to complete brewing. When the capsule 80 injects a certain amount of liquid, the capsule 80 expands, such that the second puncture liquid guiding member 50 also punctures the capsule 80. The brewed mixed liquid flows out from the second puncture liquid guiding member 50, and is finally sent to a user's vessel to complete the brewing operation. After the brewing operation is completed, the pushing base 30 is driven to drive the capsule 80 to move backward. When the edge 81 of the capsule 80 reaches the ejection base 61, since the ejection base 61 is located on the movement path of the edge 81 of the capsule 80, the ejection base 61 abuts against the edge 81 of the capsule 80 to prevent the capsule 80 from moving backward. The capsule 80 is separated from the clamping groove 31 of the pushing base 30. After the capsule 80 is separated from the pushing base 30, it falls freely under the action of gravity and leaves the main body 10 from the discharging opening 15.

There are many ways for the pushing base 30 to trigger the clamping mechanism 20 to release the capsule 80. For example, a sensor can be provided in the clamping groove 31 of the pushing base 30. When the capsule 80 is engaged into the clamping groove 31, the sensor controls the clamping mechanism 20 to release the capsule 80. Alternatively, a sensor may be provided on the main body 10 to sense a position of the pushing base 30. After the pushing base 30 reaches a designated position, the clamping mechanism 20 releases the capsule 80. The pushing base 30 can also be provided with a first trigger, and the main body 10 or the clamping mechanism 20 can be provided with a second trigger. When the pushing base 30 moves to a certain position, the first trigger triggers the second trigger to cause the clamping mechanism 20 to release the capsule 80. Certainly, the user can also choose to manually control the clamping mechanism 20 to release the capsule 80 after the capsule 80 is engaged into the clamping groove 31. The clamping mechanism 20 implements clamping by various methods such as air cylinders.

Specifically, in some embodiments, the clamping mechanism 20 includes a clamping base 21 and a first spring 22. The clamping base 21 is provided with a first sliding shaft slidably provided on the main body 10, and the first spring 22 is sleeved on the first sliding shaft, the first spring 22. At least one clamping base 21 and at least one first spring 22 are provided, and the number of clamping bases 21 corresponds to the number of first springs 22. When only one clamping base 21 and only one first spring 22 are provided, the clamping base 21 pushes the edge 81 of the capsule 80 against the main body 10.

In this embodiment, four clamping bases 21 and four the number of first springs 22 are provided respectively. The clamping bases 21 are arranged symmetrically left and right in groups of two, with one group located above the other group. The two clamping bases 21 opposite to each other cooperatively clamp the edge 81 of the capsule 80 by the elastic force of the first spring 22. The pushing base 30 is provided between two clamping bases 21 opposite to each other, and the clamping bases 21 slide left and right.

The clamping base 21 is slidably provided on the main body 10 through the first sliding shaft. The clamping base 21 slides along an axis of the first spring 22. The axis of the first spring 22 is arranged at an angle of ninety degrees to the sliding direction of the pushing base 30. The first spring 22 is clamped between the clamping base 21 and the main body 10. The clamping base 21 is reset by the first spring 22, and the clamping base 21 is located on the movement path of the pushing base 30. When the pushing base 30 moves toward the second puncture liquid guiding member 50, the clamping base 21 can be pushed by the pushing base 30 to compress the first spring 22, so that the clamping base 21 releases the edge 81 of the capsule 80, and then the pushing base 30 can push the capsule 80 to move in a direction adjacent to the second puncture liquid guiding member 50.

Specifically, in some embodiments, the clamping base 21 is provided with a clamping gap 211, a width of the clamping gap 211 is adapted to the edge 81 of the capsule 80, the clamping gap 211 extends through the clamping base 21 from top to bottom, and side walls of the clamping gap 211 limit the position of the edge 81 of the capsule 80 in a front-to-rear direction.

Specifically, in some embodiments, the clamping base 21 is provided with a first pushing surface, which can facilitate the pushing base 30 to push the clamping base 21 along the axis direction of the first spring 22. The first pushing surface is spherical surface or inclined surface, etc.

In this embodiment, the first pushing surface is an inclined surface, that is, the clamping base 21 is provided with a first pushing inclined surface 212, and the pushing base 30 is provided with a second pushing inclined surface 32 adapted to the first pushing inclined surface 212. The first pushing inclined surface 212 is located on the movement path of the second pushing inclined surface 32. The first pushing inclined surface 212 and the second pushing inclined surface 32 both extend obliquely in a direction away from the second puncture liquid guiding member 50 and away from the pushing base 30.

Specifically, in some embodiments, the ejection mechanism 60 further includes a sliding base 62 and a second spring 63. The sliding base 62 is provided with a second sliding shaft, and the second spring 63 is sleeved on the second sliding shaft. The sliding base 62 is slidably provided on the main body 10. A sliding direction of the sliding base 62 is the same as a sliding direction of the pushing base 30. An axis direction of the second spring 63 is the same as the sliding direction of the pushing base 30. The sliding base 62 and the pushing base 30 slide forward and backward. A positioning block is provided on an outer surface of the main body 10, and the second spring 63 is clamped between the sliding base 62 and the positioning block of the main body 10. The ejection base 61 is mounted on the sliding base 62 and is located on the movement path of the pushing base 30. When the pushing base 30 moves forward, the ejection base 61 can be pushed to move forward, and the second spring 63 is compressed. After the brewing is completed, the pushing base 30 moves backward, and the ejection base 61 is reset under the action of the second spring 63 The ejection base 61 moves backward to an initial position and then stops moving. The capsule 80 continues to move with the ejection base 30 until the edge 81 of the capsule 80 abuts against the ejection base 61.

Specifically, in some embodiments, in order to adapt to the capsule 80 with a small width of the edge 81, for example, the width of the edge 81 of the capsule 80 is slightly greater than a width of the clamping groove 31, an edge of the clamping groove 31 is provided with an ejection outlet 33 in communication with the clamping groove 31. The ejection base 61 includes an ejection plate 611. The ejection plate 611 is located on a movement path of the ejection outlet 33. When the pushing base 30 moves and abuts against the ejection base 61, the ejection plate 611 enters the ejection outlet 33. The pushing base 30 pushes the ejection plate 611 by an inner wall of the ejection outlet 33. At this time, the ejection plate 611 is located in an area enclosed by the edge 81 of the capsule 80 and the inner wall of the ejection outlet 33. When the pushing base 30 does not move, the ejection plate 611 cannot move either. Under the action of the second spring 63, when the ejection plate 611 moves backward and returns to an initial position, the ejection plate 611 directly pushes against the edge 81 of the capsule 80, thus implementing the separation of the capsule 80 and the pushing base 30.

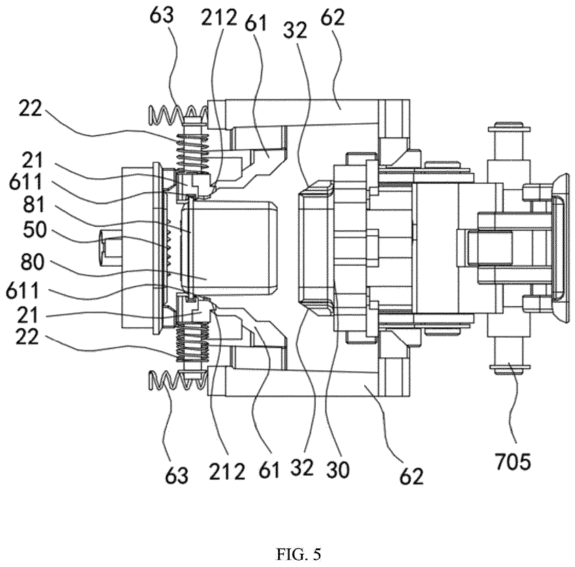

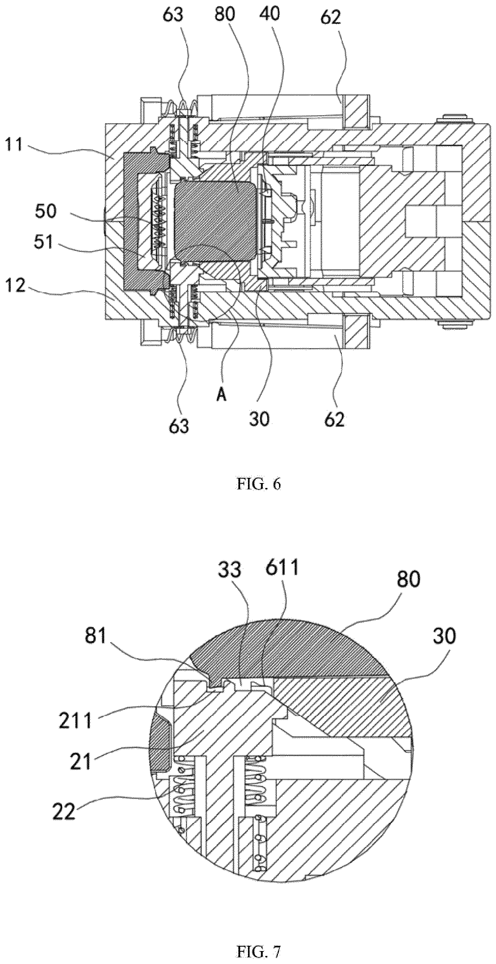

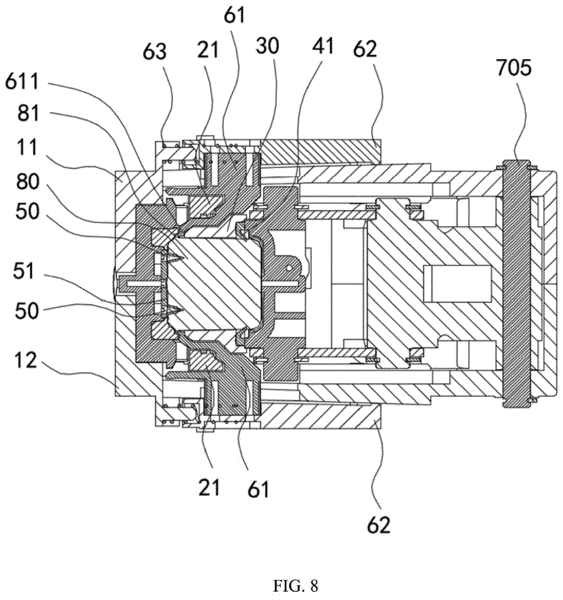

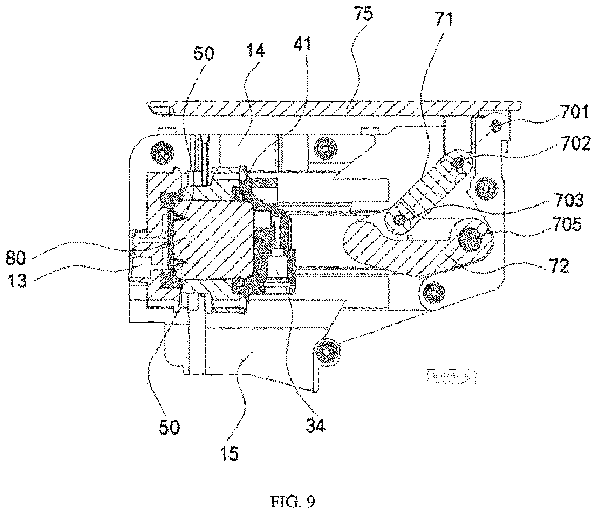

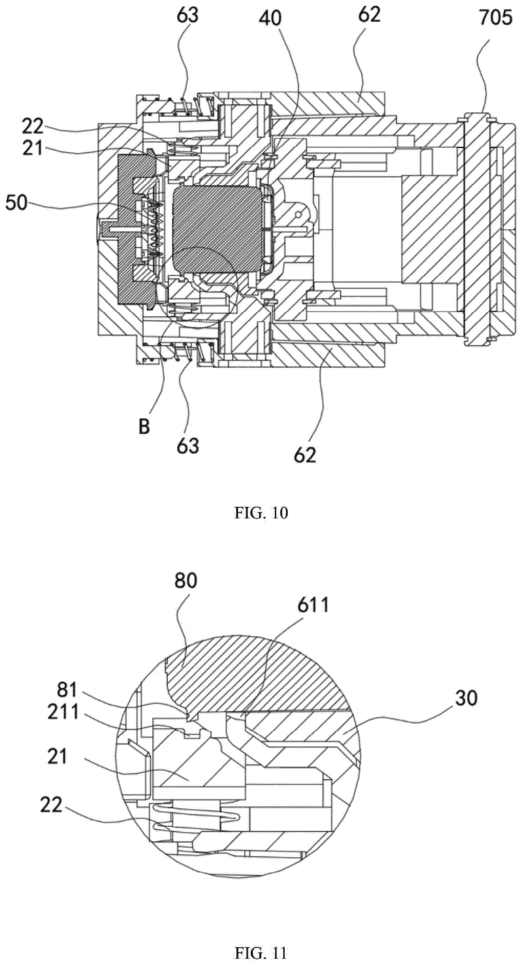

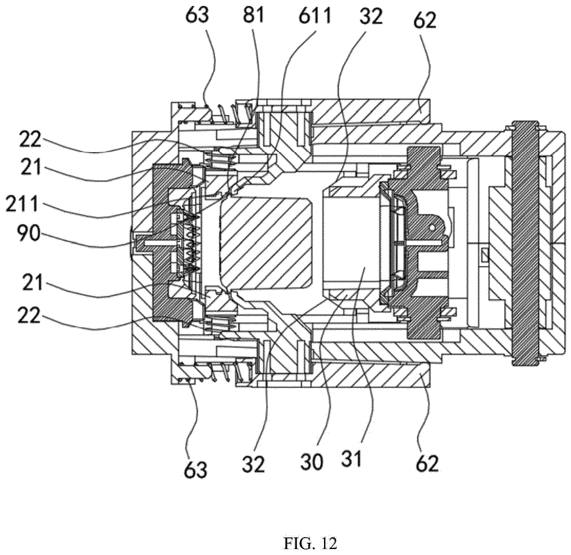

As shown in FIGS. 5 to 12, specifically, in some embodiments, the pushing base 30 moves along a first direction and a second direction. The first direction is opposite to the second direction, the first direction is a forward direction, and the second direction is the backward direction. The ejection base 61 and the clamping base 21 are arranged sequentially along the first direction and are both located on the movement path of the pushing base 30. The top and bottom of the ejection base 61 are provided with clamping bases 21. The pushing base 30 firstly pushes the ejection base 61 to move forward, and then pushes the clamping base 21 to move left and right.

When the pushing base 30 moves along the first direction, the pushing base 30 slides forward and causes the capsule 80 to enter the clamping groove 31. The pushing base 30 pushes the ejection base 61 to move along the first direction and simultaneously pushes the clamping base 21 to move along the axis direction of the first spring 22, so that the pushing base 30 can drive the capsule 80 to move.

When the pushing base 30 moves along the second direction, the pushing base 30 drives the capsule 80 to move backward, the clamping base 21 is reset under the action of the first spring 22, and the ejection base 61 is reset under the action of the second spring 63. A limiting ejection space 90 is formed between the clamping base 21 and the ejection base 61. The pushing base 30 transports the capsule 80 through the clamping groove 31. When the pushing base 30 pushes the clamping base 21 away, a depth of the capsule 80 entering the clamping groove 31 is small, and the pushing base 30 drives the capsule 80 to move forward to the second puncture liquid guiding member. The capsule 80 abuts against the capsule 80, so that the capsule 80 enters the clamping groove 31 to a greater depth. That is, when the pushing base 30 drives the capsule 80 to move backward to past the clamping base 21, the depth of the capsule 80 entering the clamping groove 31 is greater than the depth of the capsule 80 entering the clamping groove 31 when the pushing base 30 pushes the clamping base 21 away. Therefore, after the brewing is completed, when the pushing base 30 drives the capsule 80 to move backward past the clamping base 21, the pushing base 30 still abuts against the clamping base 21, the clamping base 21 is not completely reset, and the clamping base 21 cannot clamp the edge 81 of the capsule 80. When the edge 81 of the capsule 80 crosses the clamping base 21 and reaches the limiting ejection space 90, the opposite clamping base 21 is reset. Since the edge 81 of the capsule 80 crosses the clamping base 21 and reaches the limiting ejection space 90 at this time, it will not occur that the edge 81 of the capsule 80 is clamped by the clamping base 21 opposite thereto and cannot fall. When the edge 81 of the capsule 80 enters the limiting ejection space 90 and continues to move backward to abut the ejection plate 611, the capsule 80 is separated from the clamping groove 31 of the pushing base 30, thus completing the separation of the capsule 80 and the pushing base 30, and finally the capsule 80 is separated from the main body 10 under the action of gravity.

Specifically, in some embodiments, two ejection mechanisms 60 are provided and are symmetrically arranged on the left and right sides of the main body 10.

Specifically, in some embodiments, the pushing base 30 can also push the ejection base 61 to move first, and then the ejection base 61 pushes the clamping base 21 to move, so that the pushing base 30, the ejection base 61, and the clamping base 21 are interrelated, which improves the coordination and unity of the movements of the pushing base 30, the ejection base 61, and the clamping base 21.

Specifically, in some embodiments, the pushing base 30 is provided with a liquid inlet channel 34. The first puncture guiding member 40 has a liquid injection cavity and a liquid injection opening in communication with the liquid injection cavity, and the liquid injection cavity is in communication with the liquid inlet channel 34. The main body 10 is provided with a liquid outlet channel 13. The second puncture liquid guiding member 50 has a liquid outlet cavity and a liquid outlet. The liquid outlet is in communication with the liquid outlet cavity, and the liquid outlet cavity is in communication with the liquid outlet channel 13. The first puncture liquid guiding member 40 and the second puncture liquid guiding member 50 are both in the shape of a quadrangular pyramid. The ends of the first puncture liquid guiding member 40 and the second puncture liquid guiding member 50 are tips, which can quickly puncture the capsule 80. The liquid inlet channel 34 is in communication with an external liquid delivery device, and the liquid outlet channel 13 can deliver the brewed liquid to the user's vessel.

Specifically, in some embodiments, the first puncture liquid guiding member 40 is sealingly mounted in the clamping groove 31 through a first sealing member 41, and the second puncture liquid guide 50 is mounted on the main body 10 through a second sealing member 51, the first sealing member 41 acts as a leak-proof to prevent leakage during the brewing process.

As shown in FIGS. 1 to 4, specifically, in some embodiments, the capsule beverage brewing device further includes a driving mechanism 70. The main body 10 is provided with a driving chamber 19 and a brewing cavity, and the driving chamber 19 is in communication with the brewing cavity. The driving mechanism 70 is mounted in the driving chamber 19, and is configured to drive the pushing base 30 to move forward and backward. The pushing base 30, the clamping base 21, and the ejection base 61 are all mounted in the brewing cavity.

Specifically, in some embodiments, the driving mechanism 70 includes a handle 75 pivotally connected to the main body 10 through a first rotating shaft 701, a first connecting member 71 pivotally connected to the handle 75 through a second rotating shaft 702, a second connecting member 72 pivotally connected to the first connecting member 71 through a third rotating shaft 703, and a third connecting member 73 is pivotally connected to the second connecting member 72 through a fourth rotating shaft 704. The second connecting member is pivotally connected to the main body 10 through a fifth rotating shaft 705. The third connecting member 73 is pivotally connected to the pushing base 30 through a sixth rotating shaft 706. The axes of the first rotating shaft 701, the second rotating shaft 702, the third rotating shaft 703, the fourth rotating shaft 704, the fifth rotating shaft 705, and the sixth rotating shaft 706 are parallel to each other. The pivotal connection is a hinged connection, and the two parts pivotally connected to each other can rotate relative to each other.

The first rotating shaft 701 is rotatably mounted to the main body 10, and the handle 75 is sleeved on the first rotating shaft 701 through a shaft hole. The handle 75 is provided with an extension plate, and the second rotating shaft 702 is rotatably mounted to the extension plate. The second rotating shaft 702 can rotate circumferentially around the first rotating shaft 701. An upper end of the first connecting member 71 is sleeved on the second rotating shaft 702 through a shaft hole. A lower end of the first connecting member 71 is pivotally connected to the second connecting member 72 through the third rotating shaft 703. The central area of an upper end of the second connecting member 72 is provided with a mounting groove, and the lower end of the first connecting member 71 is located in the mounting groove. A front end of the second connecting member 72 is pivotally connected to a rear end of the third connecting member 73 through the fourth rotating shaft 704, and a front end of the third connecting member 73 is pivotally connected to the pushing base 30 through the sixth rotating shaft 706. A rear end of the second connecting member 72 is pivotally connected to the main body 10 through the fifth rotating shaft 705. The first rotating shaft 701 and the fifth rotating shaft 705 can only rotate around their own axes but cannot move. The second rotating shaft 702 and the third rotating shaft 703, the fourth rotating shaft 704, and the sixth rotating shaft 706 can move along their own radial directions.

When in use, the pushing base 30 is driven to move by turning the handle 75 to be closed. In this embodiment, during brewing, the handle 75 is driven to rotate forward around the first rotating shaft 701, and the first connecting member 71 pushes the second connecting member 72 to rotate downward around the fifth rotating shaft 705, so that the second connecting member 72 pushes the third connecting member73 to move forward, thereby pushing the pushing base 30 to move forward to complete the delivery of the capsule 80. After brewing is completed, the handle 75 is driven to rotate backward around the first rotating shaft 701 to be opened, and the first connecting member 71 pulls the second connecting member 72 to rotate upward around the fifth rotating shaft 705, so that the second connecting member 72 pulls the third connecting member 73 to move backward, thereby pulling the pushing base 30 to move backward.

As shown in FIGS. 1 to 4 and FIG. 9, specifically, in some embodiments, the third rotating shaft 703 and the fourth rotating shaft 704 are arranged non-coaxially. Since the third rotating shaft 703 and the fourth rotating shaft 704 are not coaxial, during brewing, when the delivery of the capsule 80 is completed, that is, when the capsule 80 reaches a predetermined position and is clamped between the first puncture liquid guiding member 40 and the second puncture liquid guiding member 50, the first rotating shaft 701, the second rotating shaft 702, and the third rotating shaft 703 are on the same straight line, which can realize the self-locking of the driving mechanism and prevent the handle 75 from being opened. At the same time, an angle between the straight line where the first rotating shaft 701, the second rotating shaft 702, and the third rotating shaft 703 are located and the straight line where the third rotating shaft 703 and the fourth rotating shaft 704 are located is greater, so that the handle 75 is rotated to close with less labor.

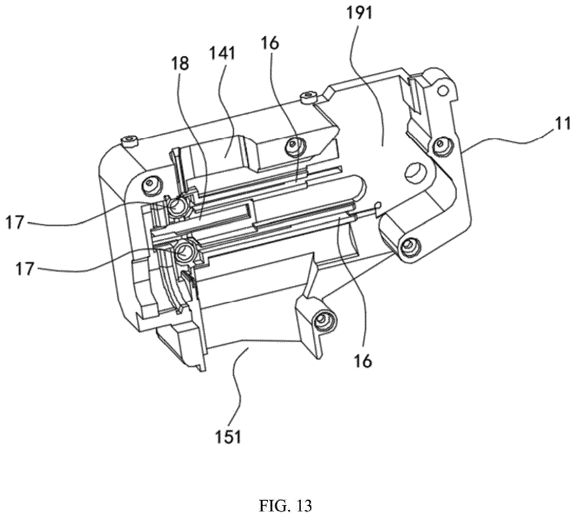

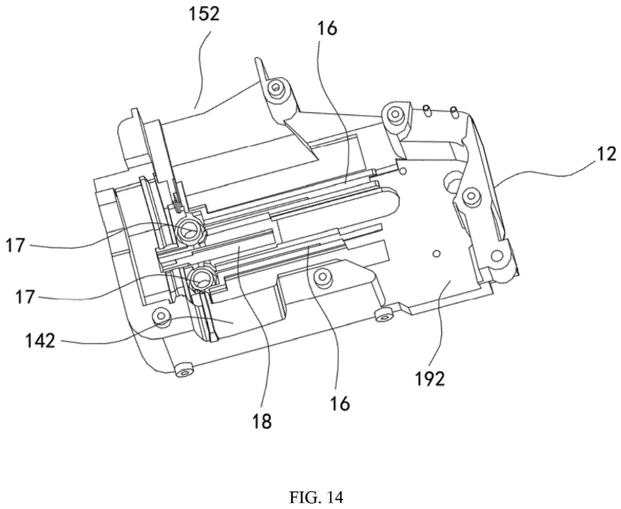

As shown in FIGS. 13 and 14, specifically, in some embodiments, the main body 10 includes a first housing 11 and a second housing 12. The first housing 11 is located on the left side of the second housing 12, and the first housing 11 is connected to the second housing 12 through bolts. The first housing 11 and the second housing 12 cooperatively enclose a feeding channel 14, the discharging opening 15, the brewing cavity, and the driving chamber 19. The feeding channel 14 is arranged from top to bottom and is in communication with the brewing cavity. The clamping mechanism 20 is located in the feeding channel 14. An inner wall of the feeding channel 14 is provided with a first guiding groove 111 and a second guiding groove 121. The first guiding groove 111 and the second guiding groove 121 are respectively in communication with the clamping gap 211 on the clamping base 21 opposite thereto. When the capsule 80 is loaded, the edge 81 is placed in the first guiding groove 111 and the second guiding groove 121. The edge 81 of the capsule 80 falls into the clamping gap 211 on the clamping base 21 along the first guiding groove 111 and the second guiding groove 121.

Specifically, in some embodiments, each of the first housing 11 and the second housing 12 is provided with a first sliding channel 16, and the first sliding channel 16 extends along a moving direction of the pushing base 30. The first sliding channel 16 on the first housing 11 is opposite to the first sliding channel 16 on the second housing 12. Both sides of the pushing base 30 are slidably disposed in the two first sliding channels 16, respectively. In this embodiment, both the first housing 11 and the second housing 12 are provided with two first sliding channels 16. The two first sliding channels 16 on the first housing 11 are spaced apart up and down. The two first sliding channels 16 on the second housing 12 are spaced apart up and down. Both sides of the pushing base 30 are provide with two extension bases. The two extension bases are spaced apart up and down and are respectively slidably disposed in the two first sliding channels 16 spaced apart up and down to improve the sliding stability of the pushing base 30.

Specifically, in some embodiments, each of the first housing 11 and the second housing 12 is provided with a second sliding channel 17. The second sliding channel 17 extends along the axial direction of the first spring 22, and the two clamping bases 21 opposite to each other are respectively slidably disposed in the second sliding channel 17 through the first sliding shaft.

Specifically, in some embodiments, each of the first housing 11 and the second housing 12 is provided with a third sliding channel 18, and the first sliding channel 16 extends along the moving direction of the pushing base 30. The first sliding channel 16 on the first housing 11 is opposite to the first sliding channel 16 on the second housing 12. The sliding base 62 is slidably disposed in the third sliding channel 18.

Specifically, in some embodiments, the first housing 11 is provided with a first feeding half-groove 141, the second housing 12 is provided with a second feeding half-groove 142, and the first feeding half-groove 141 and the second feeding half-groove 142 cooperatively form the feeding channel 14.

Specifically, in some embodiments, the first housing 11 is provided with a first discharging half-opening 151, the second housing 12 is provided with a second discharging half-opening 152, the first discharging half-opening 151 and the second discharging half-opening 152 cooperatively form the discharging opening 15.

Specifically, in some embodiments, the first housing 11 is provided with a first driving half-groove 191, and the second housing 12 is provided with a second driving half-groove 192. The first driving half-groove 191 and the second driving half-groove 192 cooperatively form the driving chamber 19.

The handle 75 of the driving mechanism 70 can cover a notch at an upper end of the feeding channel 14. When the handle 75 is rotated to cover the notch of the feeding channel 14 while simultaneously completing the feeding action of the capsule 80, which is then brewed through the first puncture liquid guiding member 40 and the second puncture liquid guiding member 50. After the brewing is completed, when the handle 75 is rotated to open the notch at the upper end of the feeding channel 14, the separation of the capsule 80 is completed, and the capsule 80 falls from the discharging opening 15.

Referring to FIGS. 5 to 12, the operating principle of the capsule beverage brewing device is as follows.

The handle 75 is rotated to open the feeding channel 14, and the capsule 80 to be brewed is placed in the feeding channel 14. The edge 81 of the capsule 80 falls into the clamping gap 211 of the clamping base 21 along the first guiding groove 111 and the second guiding groove 121, the clamping bases 21 cooperatively clamps the edge 81 of the capsule 80.

The pushing base 30 is driven to move, so that the capsule 80 is engaged into the clamping groove 31. As the pushing base 30 continues to move, the volume of the capsule 80 entering the clamping groove 31 increases.

When the pushing base 30 moves to the clamping base 21, the clamping mechanism 20 releases the edge 81 of the capsule 80, and the pushing base 30 drives the capsule 80 to move in a direction adjacent to the second puncture liquid guiding member 50 until the second puncture liquid guiding member 50 and the first puncture liquid guiding member 40 cooperatively clamp the capsule 80 and the first puncture liquid guiding member 40 punctures the capsule 80. In order to prevent the second puncture liquid guiding member 50 from discharging liquid too quickly and resulting in insufficient brewing time, the second puncture liquid guiding member 50 does not need to be punctured the capsule at that time. In addition, in some solutions, the first puncture liquid guiding member 40 and the second puncture liquid guiding member 50 can also be punctured the capsule at the same time.

Liquid is injected into the capsule 80 through the first puncture liquid guiding member 40 to brew powder in the capsule 80 to form a mixed liquid. The capsule 80 gradually expands, so that the second puncture liquid guiding member 50 punctures the capsule 80, and the mixed liquid flows out from the second puncture liquid guiding member 50 to complete brewing.

The pushing base 30 drives the capsule 80 to move in a direction away from the second puncture liquid guiding member 50. When the capsule 80 moves to the limiting ejection space 90 between the clamping base 21 and the ejection base 61, the clamping base 21 is reset. The ejection base 61 is located on the movement path of the edge 81 of the capsule 80. The ejection base 61 pushes against the edge 81 of the capsule 80, the capsule 80 is separated from the pushing base 30, and the capsule 80 falls from the discharging opening 15 and leaves the main body 10.

The above embodiments are not exhaustive enumerations based on the present utility model, and there may be many other implementation manners not listed here. Any replacements and improvements made on the basis of not violating the concept of the present utility model belong to the protection scope of the utility model.

## Claims

1. A capsule beverage brewing device, comprising a main body, a clamping mechanism mounted on the main body, a pushing base slidably provided on the main body, a first puncture liquid guiding member mounted on the pushing base, an ejection mechanism mounted on the main body, and a second puncture liquid guiding member mounted on the main body; the ejection mechanism comprising an ejection base;
wherein the pushing base is provided with a clamping groove, the main body has a discharging opening, and the second puncture liquid guiding member and the pushing base are spaced apart and are arranged above the discharging opening;
wherein the ejection base, the clamping mechanism, and the second puncture liquid guiding member are arranged sequentially along a movement path of the pushing base.

2. The capsule beverage brewing device according to claim 1, wherein the clamping mechanism comprises a clamping base and a first spring, the clamping base is slidably provided on the main body, and the first spring is clamped between the clamping base and the main body, and the clamping base is located on the movement path of the pushing base.

3. The capsule beverage brewing device according to claim 2, wherein the clamping base is provided with a first pushing inclined surface, and the pushing base is provided with a second pushing inclined surface adapted to the first pushing inclined surface, and the first pushing inclined surface is located on a movement path of the second pushing inclined surface.

4. The capsule beverage brewing device according to claim 2, wherein the ejection mechanism further comprises a sliding base and a second spring, the sliding base is slidably provided on the main body, a sliding direction of the sliding base is the same as a sliding direction of the pushing base, the second spring is clamped between the sliding base and the main body, and the ejection base is mounted on the sliding base and is located on the movement path of the pushing base.

5. The capsule beverage brewing device according to claim 4, wherein an edge of the clamping groove is provided with an ejection outlet; the ejection base comprises an ejection plate, and the ejection plate is located on a movement path of the ejection outlet.

6. The capsule beverage brewing device according to claim 4, wherein the pushing base is configured to move along a first direction and a second direction, the first direction is opposite to the second direction, the ejection base and the clamping base are arranged sequentially along the first direction and are both located on the movement path of the pushing base;
when the pushing base moves along the first direction, the pushing base pushes the ejection base to move along the first direction and simultaneously pushes the clamping base to move along an axis direction of the first spring;
when the pushing base moves along the second direction, the clamping base is reset under an action of the first spring, the ejection base is reset under an action of the second spring, and a limiting ejection space is formed between the clamping base and the ejection base.

7. The capsule beverage brewing device according to any one of claims 1 to 5, wherein the pushing base is provided with a liquid inlet channel, the first puncture liquid guiding member has a liquid injection cavity and a liquid injection opening in communication with the liquid injection cavity, and the liquid injection cavity is in communication with the liquid inlet channel.

8. The capsule beverage brewing device according to any one of claims 1 to 5, wherein the main body is provided with a liquid outlet channel, the second puncture liquid guiding member has a liquid outlet cavity and a liquid outlet in communication with the liquid outlet cavity, and the liquid outlet cavity is in communication with the liquid outlet channel.

9. The capsule beverage brewing device according to any one of claims 1 to 5, wherein the main body comprises a first housing and a second housing, the first housing and the second housing cooperatively enclose a feeding channel, and the clamping mechanism is located in the feeding channel.

10. The capsule beverage brewing device according to any one of claims 1 to 5, further comprising a driving mechanism;
wherein the driving mechanism comprises a handle pivotally connected to the main body through a first rotating shaft, a first connecting member pivotally connected to the handle through a second rotating shaft, a second connecting member pivotally connected to the first connecting member through a third rotating shaft, and a third connecting member pivotally connected to the second connecting member through a fourth rotating shaft, the second connecting member is pivotally connected to the main body through a fifth rotating shaft, and the third connecting member is pivotally connected to the pushing base through a sixth rotating shaft.
